# EUROPEAN PATENT SPECIFICATION

(11) **EP 3 894 677 B1**
(45) Date of publication and mention of the grant of the patent: **29.11.2023**
(21) Application number: 19835737.8
(22) Date of filing: 13.12.2019
(51) Int. Cl.: F01N 3/20, F01N 13/16, F01N 13/18

(54) **TANK FOR CONTAINING A FLUID AND EQUIPPED WITH A SENDER UNIT AND METHOD FOR MANUFACTURING SAME**
BEHÄLTER ZUR AUFNAHME EINES FLUIDS UND MIT EINER SENDEREINHEIT SOWIE VERFAHREN ZU SEINER HERSTELLUNG
RÉSERVOIR DESTINÉ À CONTENIR UN FLUIDE ET ÉQUIPÉ D'UNE UNITÉ ÉMETTRICE ET SON PROCÉDÉ DE FABRICATION

(30) Priority: 14.12.2018 IT 201800011134
(43) Date of publication of application: 20.10.2021
(73) Proprietor: Officine Metallurgiche G. Cornaglia S.p.A., 10092 Beinasco (TO) (IT)
(72) Inventor: BERTUCCI, Nazzareno, 10092 Beinasco (TO) (IT); CORNAGLIA, Umberto, 10092 Beinasco (TO) (IT); VILLATA, Giorgio, 10092 Beinasco (TO) (IT); TAVELLA, Andrea, 10092 Beinasco (TO) (IT)
(74) Representative: Robba, Pierpaolo
(86) International application number: PCT/IB2019/060756
(87) International publication number: WO 2020/121268

(56) References cited:
- DE-T5-112014 000 015
- US-A1- 2015 192 051
- US-A1- 2017 122 170

## Description

### Technical Field

The present invention relates to a tank for containing a fluid and equipped with a sender unit, and to a method of manufacturing said tank. The tank according to the invention is arranged to contain a fluid in liquid state, intended for a selective catalytic reduction (SCR) system of an exhaust system of an internal combustion engine. More particularly, the tank according to the invention is arranged to be installed on a vehicle equipped with an internal combustion engine, having an exhaust system incorporating a selective catalytic reduction system.

### Prior Art

SCR (Selective Catalytic Reduction) technology is based on a reduction of ammonia NH₃ to nitrogen N₂ with a consequent handover of hydrogen atoms H to nitrogen oxides NOₓ, in order to produce water molecules H₂O and nitrogen molecules N₂. Such a reaction is stoichiometric, i.e., if a sufficient amount of ammonia, proportionate to the amount of NOₓ produced by the internal combustion engine, is fed into a predetermined volume, or reaction chamber, all of NOₓ will be transformed into water and nitrogen. SCR technology allows therefore cutting down NOₓ that are released into the atmosphere with the exhaust gases of an endothermic engine.

The SCR system is fed with a solution containing 32.5% in weight urea and 67.5% demineralised water. Such a solution is commercially available under the name AdBlue^{®}. AdBlue^{®} is fed to the reduction system incorporated in the exhaust system of an endothermic engine through a metering pump connected to an injection system. A supply circuit is provided upstream of the pump and is connected to a tank in which the AdBlue^{®} liquid is stored.

The AdBlue^{®} liquid contained in the tank solidifies when temperature falls below - 11.5°C.

At present, to prevent freezing, the tank is equipped with a unit known as sender unit or drawing unit, arranged to heat the liquid contained in the tank by means of a heat exchanger and to allow drawing the liquid through a duct or suction pipe. The heat exchanger includes a metal duct in which the coolant liquid of the endothermic engine, the exhaust gases of which are treated with the AdBlue^{®} solution contained in the tank, circulates. Thanks to the heat exchanger, the temperature of the AdBlue^{®} liquid contained in the tank is brought to and kept at a temperature higher than -11.5°C.

The sender unit further includes delivery and return pipes for the liquid contained in the tank, for delivering the liquid from the tank to the metering pump and for the return of the excess amount to the tank, respectively.

The most recent sender units are equipped with some additional components besides the components mentioned above. More particularly, sender units are known that are equipped with sensors for measuring parameters of the liquid contained in the tank, such as level, temperature and quality, the latter parameter being generally determined through a measurement of the urea concentration in the solution.

The prior art sender units are further equipped with net filters for a coarse filtering of the solution contained in the tank before the solution is sucked from the tank for being sent to the metering pump.

Lastly, the sender units are also equipped with a printed circuit board for acquiring the signals coming from the sensors and with electrical connectors for connecting the unit to an electrical circuit, associated with an electronic control unit for controlling the operation of the SCR reduction system.

As evidenced above, the current sender units integrate the functions of heating and drawing the liquid contained in the tank into a single apparatus. According to the prior art, the sender unit includes a portion internal to the tank, an external portion and a flange, located between the internal and external portions, for securing the unit to the tank wall in correspondence of a suitable hole. The unit is thus inserted into the tank through an opening provided in the tank wall and is secured to the tank by means of screws engaging the flange. This situation gives rise to a number of drawbacks and limitations. For instance, the shape and the development of the portion of the sender unit housed in the tank cannot be chosen at will, for instance in order to increase the filtering capability and the unfreezing rapidity, but they must be compatible with the entrance hole in order to allow installing the unit. Moreover, the sender units presently known are designed for being generally installed in the upper tank portion, typically at the top face of the tank. Such a limitation entails the need to make sender units equipped with a suction pipe with a suitable length, in order to suck the liquid as the tank is being emptied. Yet, said suction pipe undergoes vibrations while the vehicle is traveling and can therefore undergo breakages. Always due to the situation mentioned above, supplementing a sender unit with further functions and components, e.g. sensors, is at present difficult.

US 2011/0271754 and EP 3177814 A1 disclose examples of prior art sender units.

Other examples of prior art sender units are disclosed in US 2015/192051 A1, DE 11 2014 000015 T5 and US 2017/122170 A1.

Thus, it is a first object of the invention to overcome the limitations of the prior art and to improve the filtering capability of the sender unit intended for drawing the liquid contained in the tank, which is drawn by the suction pump for being sent to the SCR system.

It is another object of the invention to allow measuring a high number of parameters of the liquid contained in the tank, by means of sensors, in order to meet the control requirements by more and more sophisticated electronic control units equipping endothermic motors.

It is a further object of the invention to provide a sender unit that can be associated with a tank in substantially any position, for instance either at the top or at the bottom.

It is yet another object of the invention to improve the capability of unfreezing the liquid contained in the tank by the sender unit.

The current tanks designed for containing a urea solution are moreover equipped with a filler pipe having a closing cap. The filler pipe allows filling the tank by means of the spout of a supply gun or a container of the urea solution. To prevent impurities from entering the tank during filling operations, the filler pipe is equipped with a filter. The filter includes a cylindrical support open both at its bottom and laterally and equipped with a net. The cylindrical support is introduced through an annular flange secured to the tank at a hole provided to that aim. The support is secured to the flange by means of a coupling system allowing removing the filter for cleaning it.

Yet, the current filler pipes do not allow a quick filling of the tank, especially because of the poor filtering capability.

It is therefore a further, but not the last object of the invention to overcome the drawbacks and the limitations of the prior art by providing a tank that can be quickly filled and industrially manufactured at advantageous costs.

The above and other objects are achieved by means of the tank according to the invention as claimed in the appended claims.

### Description of the invention

The tank according to the invention as claimed in indepencent claim 1 comprises a wall made of a plastic material and defining therein a tank chamber arranged to contain a substance in liquid state, comprising for instance a urea solution intended for a system for the selective catalytic reduction (SCR) of the exhaust gases of an endothermic engine. The tank is equipped with at least one suction or drawing assembly arranged to draw the liquid from the tank, in particular for sending it to a metering pump of a system for the selective catalytic reduction (SCR) of the exhaust gases. The drawing assembly comprises a second unit, or drawing unit, for drawing said fluid and sending it to the circuit of the SCR system. Said drawing unit comprises a drawing duct having an inlet opening and an outlet opening. The inlet and outlet openings of the drawing duct are located inside and outside the tank, respectively,

According to the invention, the drawing unit comprises an extension arranged inside the tank and defining therein an intake chamber communicating with the inlet opening and communicating with the chamber of the tank through a filter.

According to the invention, the drawing unit comprises a ferrule for fixing the drawing unit to the wall of the tank, and wherein temperature, level and quality sensors for the liquid contained in the tank are further associated with the ferrule either directly or through a rod. Said filter defines a corresponding interchangeable cartridge which has a cylindrical shape with a substantially toroidal development, provided with a filtering material pleated for increasing the filtering surface thereof and comprising a closed bottom. Said ferrule is provided with a hole for housing said filter secured into said hole.

The
drawing assembly further comprises a first unit, or heating unit, which comprises a duct for conveying a heating fluid, said duct being housed within the chamber of the tank and being provided with an inlet opening and an outlet opening for said heating fluid, said openings being arranged outside the tank.

In accordance with a first embodiment, said drawing and heating units are located adjacent, that is, they are associated with the tank wall at respective adjacent wall portions. According to this embodiment, said units can be substantially coaxial.

In accordance with a second embodiment of the invention, said units are located at a distance from each other, that is, they are associated with the tank wall at respective portions distant from each other, preferably on opposite tank faces. According to this embodiment of the invention, said units either can be diametrically opposite, with their respective longitudinal axes substantially parallel, for instance when they are associated with respective parallel opposite faces of a parallelepiped tank, or the units can be arranged with their respective axes substantially perpendicular, for instance when they are associated with respective perpendicular faces of a parallelepiped tank.

According to a preferred embodiment, the duct for conveying the heating fluid for heating the liquid contained in the tank is directly associated with the tank in the moulding step of the plastic material by means of the co-moulding technique. In this way, it is advantageously possible to obtain a heat exchanger, having the desired development and shape, inside the tank, so as to occupy a volume sufficient to ensure the desired unfreezing

Advantageously, said heating duct can be externally smooth or embossed, and can be made of steel or of a suitable plastic material or of the same plastic material as that of the tank. Moreover, the heating duct can be free or can be secured by means of brackets or clips located in the tank, in order to prevent possible displacements and/or breakages due to vibrations and oscillations during use.

Preferably, the tank further has an inlet for the return of the excess substance coming from the SCR system. Such an inlet preferably consists of a thin tube co-moulded in the tank wall and provided with a connecting joint outside the tank for connection of a return pipe coming from the SCR system. Such a thin tube is preferably made of plastics, e.g. the same plastic material as that of the tank, or of metal or another material. Preferably, said thin tube is located near the wall portion to which the first heating unit is secured and preferably on the top face of the tank.

In a particular embodiment, the heating duct is equipped with one or more solenoid valves, preferably located outside the tank, to put said duct in communication, when necessary, with the cooling circuit of an endothermic engine. Said valves are preferably provided with suitable fast couplings for connection to the pipes of the cooling circuit of the endothermic engine and with an electrical connector for allowing connection to an electrical circuit associated with a temperature sensor, for opening and closing the valves depending on the temperature.

The tank can have shapes and sizes chosen depending on the client's needs and the vehicle sizes.

The tank will further be equipped with a filler pipe for introducing the liquid into the tank, the filler pipe being preferably provided with a net filter suitably dimensioned so as to enable increasing the surface through which the liquid passes while the tank is being filled. In this manner, it is advantageously possible to make the filter of the filler pipe with porosity lower than the current 100 microns. According to this particular embodiment, the filter of the filler pipe can be made with porosity in the range 20 to 100 microns. Advantageously, the filtering surface of the filler pipe will be at least about 9550 mm², to allow an adequate filling rate, notwithstanding the reduction in the porosity of the filtering surface.

### Brief Description of the Figures

Some preferred embodiments of the invention will be described hereinafter with reference to the accompanying drawings, in which:
- Fig. 1 is a perspective view of a tank in accordance with a first embodiment of the invention;
- Fig. 2 is a cross-sectional view, taken along a first vertical plane, of the tank shown in Fig. 1;
- Fig. 3 is an enlarged view of a detail of Fig. 2;
- Fig. 4 is a cross-sectional view, taken along a second vertical plane rotated by 90°, of the tank shown in Fig. 1;
- Fig. 5 is an enlarged view of a detail of Fig. 4;
- Fig. 6 is a cross-sectional view of the drawing unit of the tank shown in Fig. 1;
- Fig. 7 is a plan view from below of the drawing unit shown in Fig. 6;
- Fig. 8 is a side view of the drawing unit shown in Fig. 6;
- Fig. 9 is a cross-sectional view, taken along a vertical plane, which is not part of the present invention;
- Fig. 10 is an enlarged view of a detail of Fig. 9;
- Fig. 11 is a perspective view of the drawing unit of the tank shown in Fig. 9;
- Fig. 12 is a perspective view from above of the drawing unit shown in Fig. 11;
- Fig. 13 is an exploded perspective view of the drawing unit in accordance with the first embodiment of the invention;
- Fig. 14 is a plan view from below of the drawing unit shown in Fig. 13;
- Fig. 15 is a side view of the heating unit equipped with a solenoid valve;
- Fig. 16 is a cross-sectional view, taken along a first vertical plane, of the tank equipped with a filler pipe according to a preferred embodiment of the invention;
- Fig. 17 is a cross-sectional view, taken along a second vertical plane rotated by 90°, of the tank shown in Fig. 16;
- Fig. 18 is a perspective view of the filler pipe shown in Fig. 16;
- Fig. 19 is a cross-sectional view, taken along a vertical plane, of the filler pipe shown in Fig. 16;
- Fig. 20 is an exploded view of the filler pipe shown in Fig. 16.

In all accompanying Figures, the same reference numerals have been used to denote equal or functionally equivalent components.

### Description of a Preferred Embodiment

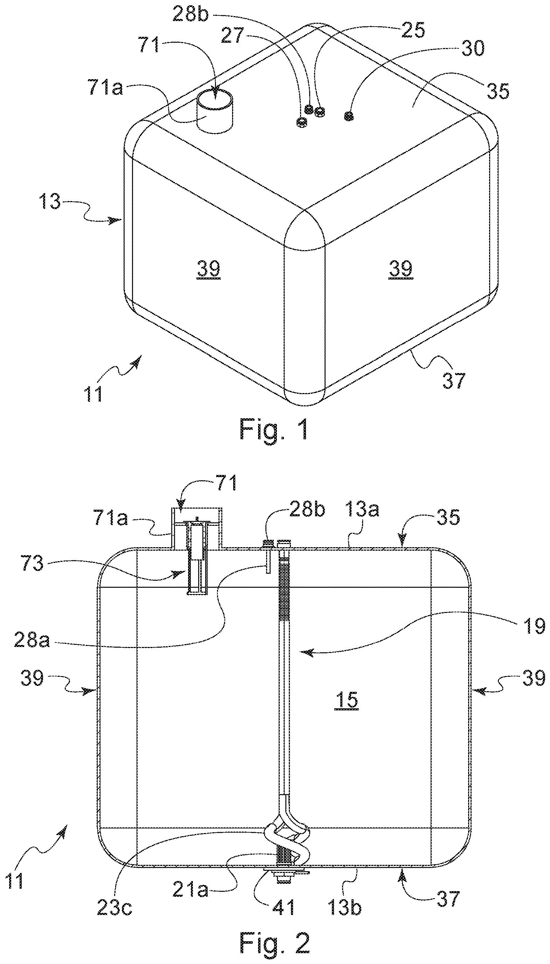

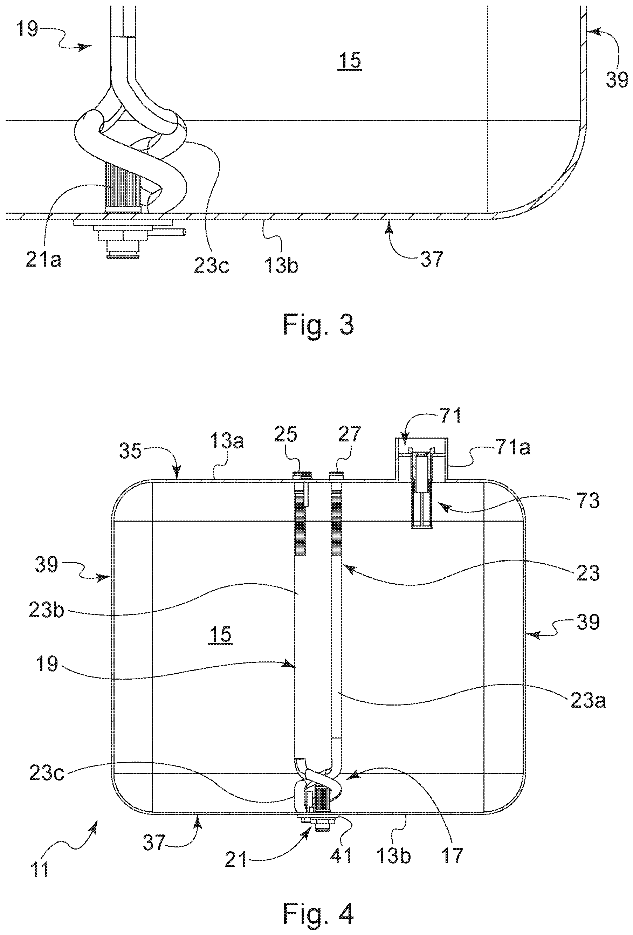

Referring to Figs. 1 to 5, a first embodiment of a tank 11 according to the invention is illustrated. Tank 11 has a wall 13, made of a plastic material, internally defining a tank chamber 15. The material wall 13 is made of is such as to allow tank 11 to contain a substance in liquid state comprising, for instance, a urea solution intended for a system for the selective catalytic reduction (SCR) of the exhaust gases of an endothermic engine. Tank 11 is equipped with at least one suction or drawing assembly 17, arranged to draw the fluid from tank 11, in particular in order to send it to a suction or metering pump of a system for the selective catalytic reduction (SCR) of the exhaust gases.

Drawing assembly 17 includes a second unit 21, or drawing unit, for drawing said fluid and sending it to the circuit of the SCR system.

According to the invention, drawing unit 21 comprises an extension 21a arranged inside tank 11 and internally defining an intake chamber 21b communicating with an outlet opening 33 and communicating with chamber 15 of tank 11 through a filter 57 of the drawing unit.

Preferably, drawing assembly 17 further includes a first unit 19, or heating unit, intended for heating the fluid in tank 11.

Heating unit 19 includes a heating duct 23, provided with an inlet opening 25 and an outlet opening 27, for conveying a heating fluid. Duct 23 extends, within tank 11, from inlet opening 25 towards outlet opening 27 preferably as an integral piece, i.e. preferably without connections or interruptions. In the illustrated embodiment, moreover, duct 23 of the first unit 19 comprises a rectilinear portion and a spiral section. A delivery section 23a and a return section 23b are defined within said rectilinear portion, and said spiral section 23c establishes communication between sections 23a, 23b. Moreover, always with reference to the illustrated embodiment, spiral section 23c and drawing unit 21 are configured so that said spiral section 23c substantially surrounds inlet opening 31 of said drawing unit 21 substantially defined at the outer surface of filter 57.

Inlet and outlet openings 25, 27 of duct 23 are located outside tank 11 and can be connected, by known means, to a section of a cooling circuit of an endothermic engine. Said endothermic engine preferably is the same engine whose exhaust gases are treated by the SCR system receiving the fluid contained in the tank.

According to a particular embodiment of the invention, said heating and drawing units 19 and 21 are advantageously independent units, that is, they are mutually separated by a portion of the wall of tank 11, so that, should said portion of the tank wall be removed, said units 19, 21 would be disjoined from each other. Thus, advantageously, according to the invention, heating unit 19 and drawing unit 21 can be associated with tank 11 at adjacent portions, or even at spaced apart portions, of wall 13 of tank 11.

Referring again to Figs. 1 to 5, in accordance with a first embodiment of the invention, said units 19, 21 are located at a distance from each other, that is, they are associated with wall 13 of tank 11 at respective portions 13a, 13b of said wall distant from each other, preferably on opposite faces 35, 37 of tank 11. According to this embodiment of the invention, units 19, 21 can be diametrically opposite, with the respective longitudinal axes substantially parallel and preferably coaxial, for instance when they are associated with respective parallel faces 35, 37 of a parallelepiped tank 11. In the alternative, said units 19, 21 can be arranged with the respective longitudinal axes substantially perpendicular, for instance when they are associated with respective perpendicular faces 35, 39 of a parallelepiped tank 11.

In the illustrated embodiment, unit 19 and unit 21 extend in a substantially rectilinear direction and are arranged substantially coaxial to each other. Tank 11 shown in the Figures is oriented in its normal use configuration, i.e. with face 35 housing heating unit 19 located at the top and with face 37 housing drawing unit 21 located at the bottom. In accordance with such an arrangement, heating unit 19 extends over substantially the whole depth of tank 11, i.e. substantially across the tank in vertical direction, and drawing unit 21 extends over a portion sufficient to draw the liquid from the bottom of tank 11.

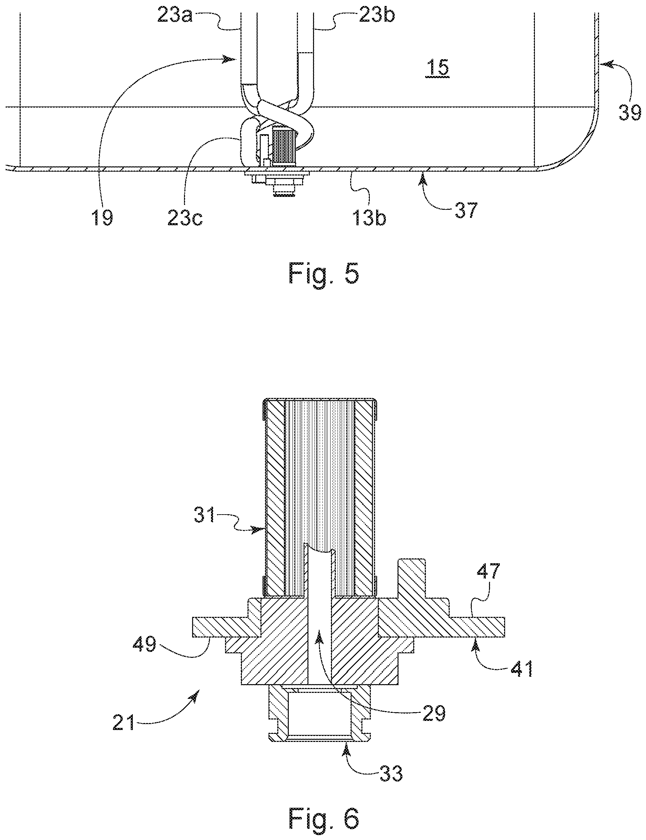

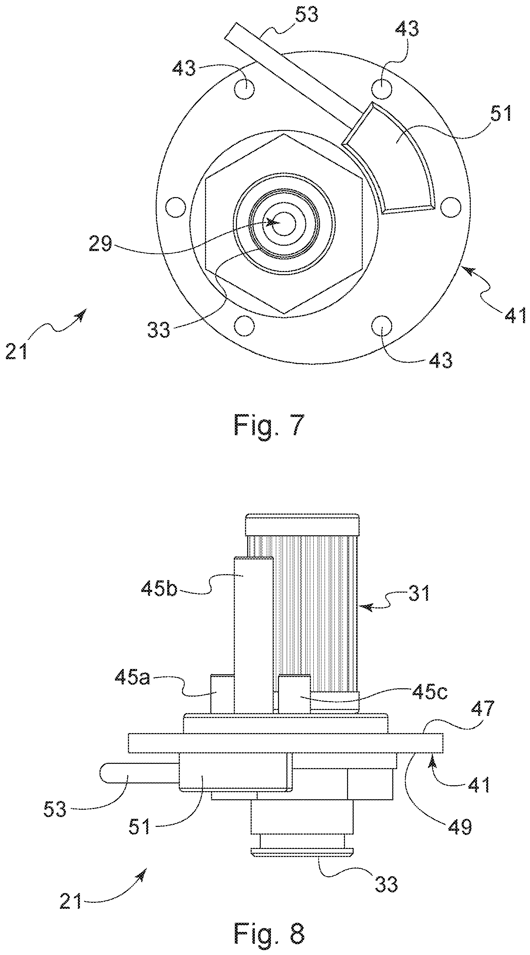

As it can be better seen in Figs. 6 and 7, drawing unit 21 includes a drawing duct 29 having an inlet opening 31 and an outlet opening 33. Inlet and outlet openings 31, 33 of drawing duct 29 are located inside and outside tank 11, respectively. Drawing unit 21 further includes a ring nut or ferrule 41 provided with through-holes 43 for securing, for instance by means of screws, drawing unit 21 to wall 13 of tank 11 at a suitable hole provided therein. In the alternative, ferrule 41 can be welded or glued to said wall 13 of tank 11. Ferrule 41 is moreover associated with temperature sensors 45a, level sensors 45b and quality sensors 45c for the liquid contained in tank 11. Said sensors 45a, 45b and 45c are associated with ferrule 41 on face 47 of said ferrule facing the inside of tank 11, so as to be exposed in chamber 15 enclosed by wall 13 of tank 11. A seat 51 internally housing a printed circuit board electrically connected to said sensors 45a, 45b, 45c is provided on the opposite face 49 of ferrule 41. The printed circuit board is also equipped with connectors for connecting the printed circuit board, through a cable 53, to an electrical circuit associated with an electronic control unit for controlling the functions of the SCR system through the signals coming from sensors 45a, 45b, 45c.

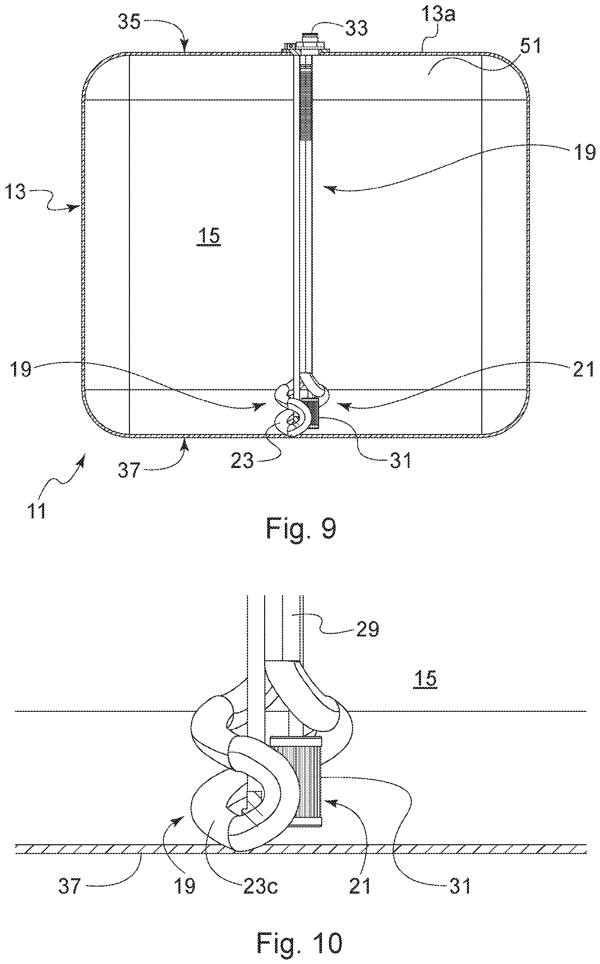

Turning now to Figs. 9 and 10, said units 19, 21 are located adjacent, that is, they are associated with tank wall 13 at a respective and substantially coincident wall portion 13a. In the illustrated embodiment, heating unit 19 and drawing unit 21 are located adjacent on the same face 35 of a substantially parallelepiped tank 11. In the illustrated example, unit 19 and unit 21 extend in a substantially rectilinear direction and are arranged substantially coaxial to each other. Tank 11 illustrated is oriented in its normal use configuration, i.e. with face 35, housing heating unit 19 and drawing unit 21 at portion 13a located at the top. In accordance with such an arrangement, heating unit 19 preferably extends over substantially the whole depth of tank 11, i.e. substantially across the tank in vertical direction. Moreover, always with reference to this embodiment, drawing unit 21 also preferably extends over the whole depth of tank 11, i.e. substantially across the tank in vertical direction, so as to allow sucking the liquid from tank 11, preferably until the liquid is almost completely exhausted.

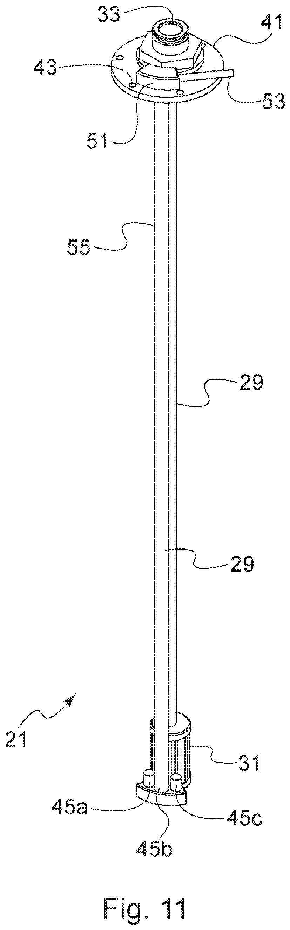

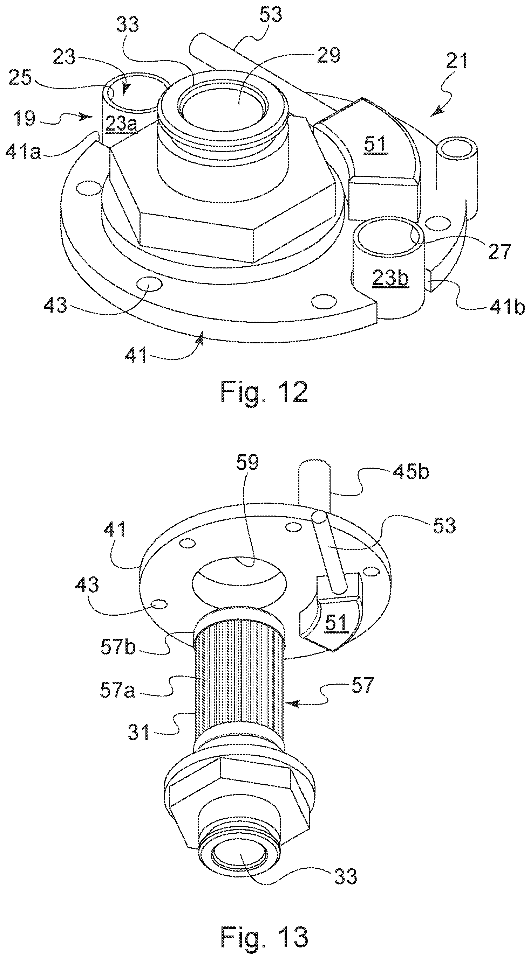

As it can be better seen in Figs. 11 and 12, drawing unit 21 includes a drawing duct 29 having an inlet opening 31, substantially consisting of the outer surface of filter 57, and an outlet opening 33. Inlet and outlet openings 31, 33 of drawing duct 29 are located inside and outside tank 11, respectively. Moreover, drawing duct 29 extends across chamber 15 in vertical direction, so as to allow sucking the liquid from tank 11, preferably until the liquid is almost completely exhausted.

Referring in particular to Fig. 11, temperature sensors 45a, level sensors 45b and quality sensors 45c for the liquid contained in tank 11 are associated with a rod 55 extending over substantially the whole depth of tank 11 starting from ferrule 41.

Referring in particular to Fig. 12, in this second embodiment, ferrule 41 is made with circular shape and has a pair of diametrically opposite recesses 41, 41b for the passage of delivery section 23a and return section 23b of duct 23. In the illustrated embodiment, moreover, duct 23 of the first unit 19 comprises a rectilinear portion 23a, 23b and a spiral section 23c. A delivery section 23a and a return section 23b are defined in said rectilinear portion, and said spiral section 23c establishes communication between sections 23a, 23b. Moreover, always with reference to the illustrated embodiment, spiral section 23c and drawing unit 21 are configured so that said spiral section 23c substantially surrounds inlet opening 31 of said drawing unit 21, substantially defined by the outer surface of filter 57.

In this embodiment, as it can be appreciated in particular from Fig. 12, unit 19 and unit 21 are associated with wall 13 in substantially coincident positions, while still being two separate independent units. Said units 19, 21 are therefore structurally connected only by wall 13 of tank 11.

According to a preferred embodiment, duct 23 for heating the liquid contained in tank 11 is associated with wall 13 of tank 11 directly in the moulding step of the plastic material by means of the co-moulding technique. In this way, it is advantageously possible to obtain a heat exchanger, having the desired development and shape, by means of unit 19 inside tank 11, so as to occupy a volume sufficient to ensure the desired unfreezing. For instance, duct 23 could have such a development that it extends within chamber 15 either vertically, as shown for instance in Fig. 9, or also horizontally.

Advantageously, the wall of duct 23 of unit 21 can be smooth or embossed and can be made of steel or of a suitable plastic material, even identical to the material of walls 13. Moreover, duct 23, extending within chamber 15 with its delivery and return sections 23a, 23b and its spiral connecting section 23c, can be free or can be secured by means of clips or hangers or brackets located in chamber 15 of the tank and arranged to prevent possible displacements and/or breakages due to vibrations and oscillations during use, e.g. while a vehicle on which the tank is installed is traveling.

During the moulding process, preferably a rotational moulding, of the plastic material of tank 11, a pipe made of stainless steel or another material is introduced into and secured inside the same tank and is then connected to the cooling system of the internal combustion engine in order to act as a heat exchanger.

Advantageously, according to the invention, preferably a single flange 41 carries both temperature, level and quality sensors 45a, 45b, 45c for monitoring the parameters of the liquid contained in the tank, and the electronic apparatus consisting of the printed circuit board housed in seat 51 and transmitting the signals coming from said sensors 45a, 45b, 45c to the electrical circuit of the vehicle through an integrated electrical connection.

Moreover, always according to the invention, said flange 41 preferably also carries an integrated filter for purifying the operative liquid contained in tank 11 from impurities, and a threaded connection at opening 33 for the outlet of the filtered liquid.

Preferably, according to the invention, tank 11 further has an inlet 28 for the return of the excess substance coming from the SCR system. Such an inlet 28 preferably consists of a thin tube 28a co-moulded in tank wall 13 and provided with a connecting joint 28b located outside tank 11 for connection of a return pipe coming from the SCR system. Such a thin tube 28a is preferably made of plastics, e.g. the same plastic material as that of the tank, or of metal or another material. Preferably, said thin tube 28a is located near wall portion 13a to which the first heating unit 19 is secured, and preferably on top face 35 of tank 11.

Always according to the invention, tank 11 is moreover provided with a vent opening 30, preferably formed on said top face 35 of tank 11 and intended to allow gas discharge towards the atmosphere, in order to avoid pressure increase within the tank. Said opening 30 can be advantageously equipped with a filter for preventing entry of impurities.

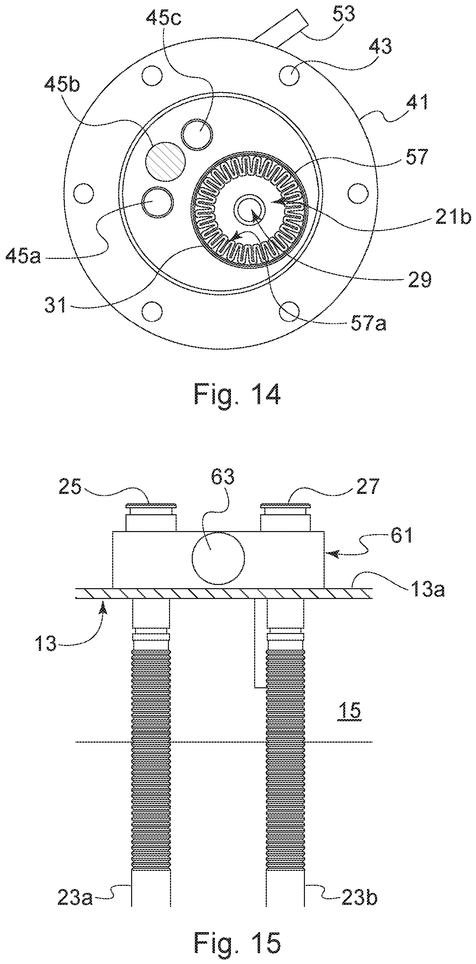

Referring in particular to Figs. 13 and 14, drawing unit 21 includes a filter 57, preferably with substantially cylindrical shape, having a filtering material 57a that is preferably pleated in order to increase the filtering surface. Filtering material 57a has a substantially toroidal shape, has a closed bottom 57b and defines a corresponding and preferably interchangeable cartridge, as it can be better appreciated from Fig. 13. In this embodiment, flange 41 is thus provided with a hole 59 for housing a cylindrical cartridge of filtering material 57a. The cylindrical cartridge of filtering material 57a can advantageously be screwed or secured in another way into said hole 59.

In other embodiments, filter 57 will be a "for-life" filter, i.e. it does not need to be replaced during the whole life of the vehicle. Filtering material 57a can consist for instance of a pleated net or of another suitable material. The filtering degree of filtering material 57a will preferably range from 1 to 100 microns, in order to meet the different use requirements.

Referring to Fig. 15, there is shown an embodiment of the invention in which inlet and outlet openings 25, 27 of duct 23 of the first heating unit 19 are connected to at least one solenoid valve 61. According to the invention, solenoid valve 61 is located outside tank 11, in contact with wall 13 of tank 11. In the specific case of the illustrated embodiment, solenoid valve 61 is secured against portion 13a of said wall 13. Said solenoid valve 61 is arranged to intercept the flow of the heating fluid circulating in duct 23 in order to adjust the flow rate thereof. Typically, said fluid is the fluid of the cooling circuit of the endothermic engine the exhaust system of which is equipped with an SCR system to which the fluid contained in tank 11 is sent. Solenoid valve 61 is provided with a connector 63 for connecting solenoid valve 61 to an electrical circuit associated with an electronic control unit.

Turning again to Fig. 1, tank 11 has a seat 71 for housing a filler pipe for filling up tank 11. Seat 71 can be obtained by forming a cylindrical extension 71a in tank wall 13 while the tank is being moulded. Cylindrical extension 71a extends outside tank 11 in a direction substantially perpendicular to top face 35 of the tank body. Said extension 71a surrounds a preferably circular opening, housing the filler pipe.

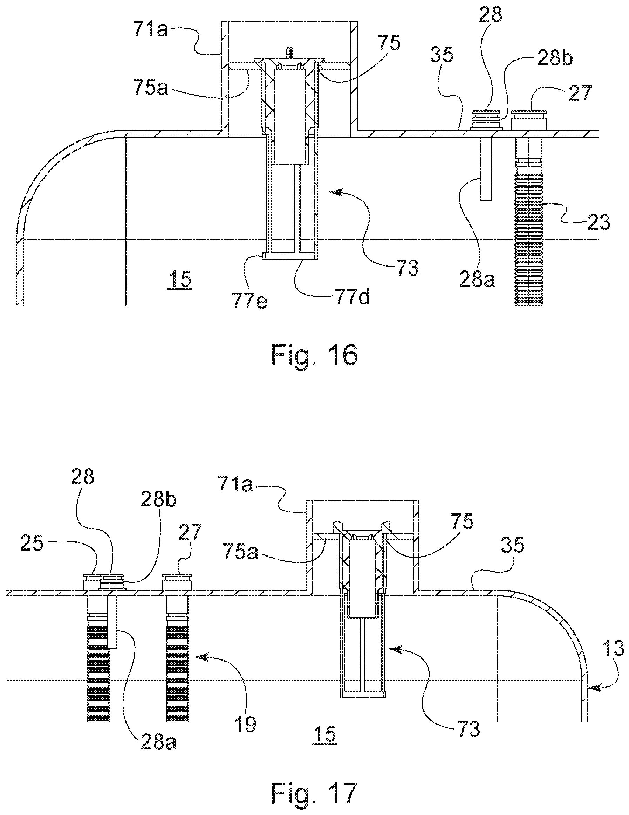

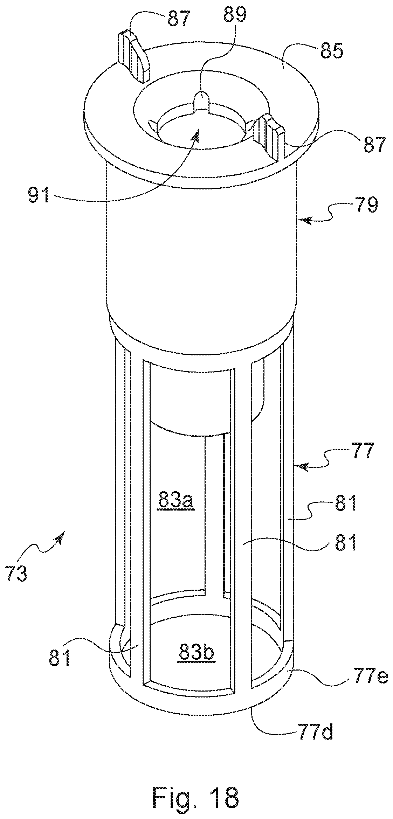

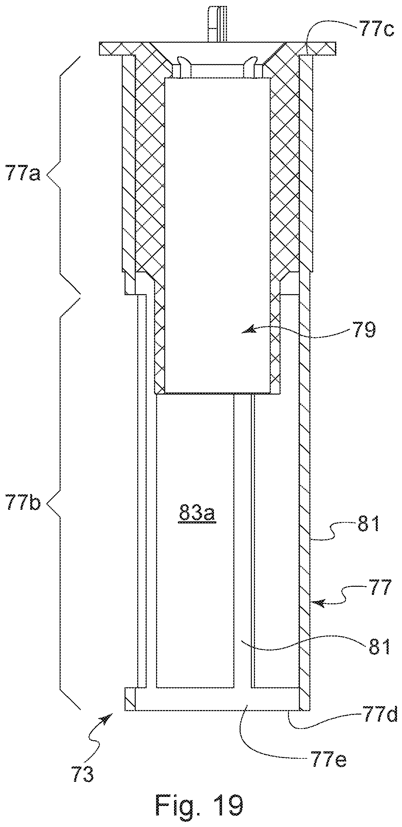

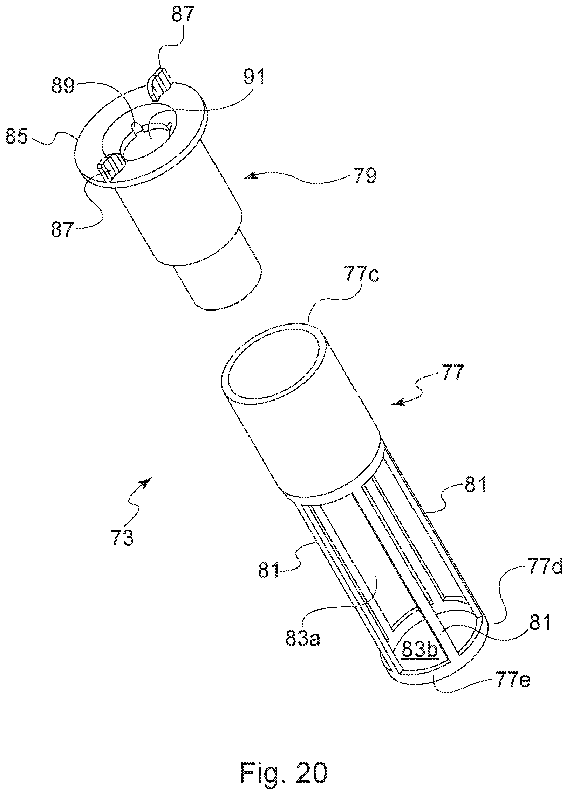

Referring to Figs. 16 to 20, there is shown in detail a filler pipe 73 made according to a preferred embodiment of the invention. In the illustrated embodiment, an opening 75 is formed in a transverse wall or partition 75a of extension 71a. Said transverse wall or partition 75a is formed inside extension 71a and lies in a plane substantially parallel to, but not coinciding with face 35 of the body of tank 11. In other embodiments, transverse partition 75a coincides with tank wall 13 and lies therefore in a plane coinciding with that of said wall 13. In the illustrated embodiment, extension 71a has a cylindrical shape with circular cross-section, and also internal seat 71 has a cylindrical shape with circular cross-section. Opening 75 for the passage of filler pipe 73 is formed substantially centrally of transverse partition 75a.

Filler pipe 73 comprises a body of plastic material in which an outer hollow portion 77 and an inner hollow portion 79 are defined. Outer portion 77 has a substantially cylindrical shape with circular cross-section and includes a laterally closed portion 77a and a laterally open portion 77b. Both bases 77c, 77d of outer portion 77 are open. Open outer portion 77b defines a set of axial extensions 81, five in the illustrated example, which extend along as many generatrices starting from laterally closed portion 77a and end at an annular portion 77e of open base 77d. Open portion 77b and the corresponding open base 77d house a filtering net 83a, 83b arranged to separate possibly present impurities from the substance flow introduced into filler pipe 73 for filling tank 11. Closed portion 77a of outer hollow portion 77 can be secured, at open base 77c, into opening 75 provided in transverse wall 75a of seat 71 in tank 11. Said closed portion 77a can be secured into opening 75 by known means, for instance a toothed joint, allowing removing outer portion 77 of filler pipe 73 from seat 71 for instance in order to clean filter 83a, 83b. In the alternative, it is possible to permanently secure said outer hollow portion 77 to opening 75.

Filler pipe 73 according to this preferred embodiment of the invention further includes an inner hollow portion 79 comprising a cylindrical body with circular cross-section removably housed in outer hollow portion 77. Said inner portion 79, when housed in outer portion 77, extends over the whole length of closed portion 77a starting from open base 77c, and over a section of open portion 77b corresponding to about 1/4 of the length of said open portion 77b.

According to this embodiment of the invention, inner portion 79 includes an annular ferrule 85 having tabs 87 axially extending outside said annular ferrule 85. Inner portion 79 can be made to engage outer portion 77 by manually rotating inner portion 79 by means of said tabs 87.

Advantageously, filler pipe 73 has a considerably wider filtering surface than the current filler pipes. The filtering surface of filler pipe 73 is substantially given by the extension of filtering net 83a, 83b surrounding open cylindrical portion 77b and covering open base 77d of the body of outer portion 77.

Advantageously, inner portion 79 is equipped with an insert including a permanent magnet arranged to cooperate with the valve provided in the gun delivering the urea solution. Aeration slots 89 are provided in opening 91 of inner portion 79 surrounded by ferrule 85, through which the spout of said delivery gun is introduced.

Closed portion 77a of outer portion 77 of filler pipe 73 can moreover be locked by means of a fast coupling into opening 75 provided in partition 75a.

### Industrial applicability

The tank according to the invention has advantageous industrial application, since it is arranged to be installed aboard vehicles actuated by endothermic engines, in order to contain a fluid in liquid state, intended for a system for the selective catalytic reduction (SCR) of the exhaust system of the endothermic engine.

The invention as described and illustrated can undergo several changes and modifications, falling within the same inventive principle.

## Claims

1. Tank (11) for containing a fluid, comprising a wall (13) made of a plastic material and defining therein a tank chamber (15), and an assembly (17) for drawing the fluid contained in the tank, said assembly (17) being equipped with a second unit (21), or drawing unit, which comprises a duct (29) having an inlet opening (31) and an outlet opening (33) located inside and outside the tank (11), respectively, wherein the drawing unit (21) comprises an extension (21a) arranged inside the tank (11), said extension defining therein an intake chamber (21b) communicating with the outlet opening (33) and communicating with the chamber (15) of the tank (11) through a filter (57), **characterized in that** said drawing unit (21) comprises a ferrule (41) for fixing the drawing unit (21) to the wall (13) of the tank (11), and wherein temperature, level and quality sensors (45a, 45b, 45c) for the liquid contained in the tank (11) are further associated with the ferrule (41) either directly or through a rod (55) and **in that** said filter (57) defines a corresponding interchangeable cartridge which has a cylindrical shape with a substantially toroidal development, provided with a filtering material (57a) pleated for increasing the filtering surface thereof and comprising a closed bottom (57b), said ferrule (41) being provided with a hole (59) for housing said filter (57) secured into said hole (59).

2. Tank according to claim 1, wherein said sensors (45a, 45b, 45c) are associated with the ferrule (41) on the face (47) of said ferrule facing the inside of the tank (11) so that they open into the chamber (15) enclosed by the wall (13) of the tank (11), and wherein on the opposite face (49) of the ferrule (41) there is provided a seat (51) housing therein a printed circuit board electrically connected to said sensors (45a, 45b, 45c).

3. Tank according to claim 1 or 2, wherein said drawing assembly (17) further comprises a first unit (19), or heating unit, which comprises a duct (23) for conveying a heating fluid, said duct being housed within the chamber (15) of the tank and being provided with an inlet opening (25) and an outlet opening (27) for said heating fluid, said openings being arranged outside the tank (11), and wherein said heating and drawing units (19,21) are separated from each other by a wall portion (13), whereby, if said tank wall portion were removed, said units (19,21) would be disjoined from each other.

4. Tank according to claim 3, wherein said first unit (19) and said second unit (21) are associated with the tank at different portions (13a, 13b) of said tank wall (13).

5. Tank according to claim 3 or 4, wherein the tank has a prismatic shape, and wherein the first unit (19) and the second unit (21) are arranged on different faces (35, 37, 39) of the prism.

6. Tank according to any of the claims 3 to 5, wherein the inlet opening (25) and the outlet opening (27) of the duct (23) of the first heating unit (19) are connected to at least one solenoid valve (61) located outside the tank (11) and in contact with the tank wall (13), said at least one solenoid valve (61) being arranged to intercept the flow of the heating fluid circulating within the duct (23) in order to adjust the flow rate thereof.

7. Method for manufacturing a tank (11) for containing a fluid, the tank comprising a wall (13) made of a plastic material and defining therein a tank chamber (15), and an assembly (17) for drawing the fluid contained in the tank, said assembly (17) being equipped with a second unit (21), or drawing unit, which comprises a duct (29) having an inlet opening (31) and an outlet opening (33) located inside and outside the tank (11), respectively, wherein said method comprises the steps of:
- obtaining a tank (11) by means of moulding of plastic materials in a mould for plastic materials;
- providing said second unit (21), or drawing unit, comprising an extension (21a) defining therein an intake chamber (21b) communicating with the outlet opening (33) and communicating with the chamber (15) of the tank (11) through a filter (57), said drawing unit (21) comprising a ferrule (41) for fixing the drawing unit (21) to the wall (13) of the tank (11), and wherein temperature, level and quality sensors (45a, 45b, 45c) for the liquid contained in the tank (11) are further associated with the ferrule (41) either directly or through a rod (55), said filter (57) defining a corresponding interchangeable cartridge which has a cylindrical shape with a substantially toroidal development, provided with a filtering material (57a) pleated for increasing the filtering surface thereof and comprising a closed bottom (57b), said ferrule (41) being provided with a hole (59) for housing said filter (57) secured into said hole (59);
- associating said second unit (21) with the wall (13) of the tank thus obtained in such a way that said extension is housed within the tank.

8. Method according to claim 7, wherein said step of obtaining the tank (11) comprises the steps of:
- providing a first unit (19), or heating unit, which comprises a duct (23) for conveying a heating fluid, said duct being housed within the tank chamber (15) and being provided with an inlet opening (25) and an outlet opening (27) for said heating fluid, said openings being located outside the tank (11);
- placing said first unit (19) into a mould for plastic materials;
- obtaining, by means moulding of plastic materials in said mould for plastic materials, a tank (11) incorporating said first unit (19).

## Patentansprüche

1. Behälter (11) zur Aufnahme eines Fluids, mit einer Wand (13), die aus Kunststoff hergestellt ist und eine Behälterkammer (15) bildet, und einer Baugruppe (17) zum Ansaugen des in dem Behälter enthaltenden Fluids, wobei die Baugruppe (17) mit einer zweiten Einheit (21) oder Ansaugeinheit versehen ist, die einen Kanal (29) aufweist, der eine Einlassöffnung (31) und eine Auslassöffnung (33) aufweist, die innerhalb bzw. außerhalb des Behälters (11) angeordnet sind, wobei die Ansaugeinheit (21) eine Verlängerung (21a) aufweist, die innerhalb des Behälters (11) angeordnet ist, wobei die Verlängerung eine Einlasskammer (21b) definiert, die mit der Auslassöffnung (33) in Verbindung steht und mit der Kammer (15) des Behälters (11) durch einen Filter (57) in Verbindung steht, **dadurch gekennzeichnet, dass** die Ansaugeinheit (21) eine Hülse (41) zum Fixieren der Ansaugeinheit (21) an der Wand (13) des Behälters (11) aufweist, und wobei Temperatur-, Pegel- und Qualitätssensoren (45a, 45b, 45c) für die in dem Behälter (11) enthaltene Flüssigkeit entweder direkt oder durch eine Stange (55) der Hülse (41) zugeordnet sind, und dass der Filter (57) eine entsprechende austauschbare Kartusche bildet, die eine zylindrische Form mit einem im Wesentlichen toroidalen Fortsatz aufweist, mit Filtermaterial (57a) versehen ist, dass zur Erhöhung der Filteroberfläche gefaltet ist und einen geschlossenen Boden (57b) aufweist, wobei die Hülse (41) mit einer Öffnung (59) zur Aufnahme des Filters (57), der in der Öffnung (59) befestigt ist, versehen ist.

2. Behälter nach Anspruch 1, wobei die Sensoren (45a, 45b, 45c) der Hülse (41) an der Seite (57) der Hülse zugeordnet sind, die der Innenseite des Behälters (11) zugewandt ist, so dass sie sich in die Kammer (15), die von der Wand (13) des Behälters (11) umschlossen ist, öffnen, und wobei auf der gegenüberliegenden Seite (49) der Hülse (41) ein Sitz (51) vorgesehen ist, in dem eine Leiterplatte angeordnet ist, die elektrisch an die Sensoren (45a, 45b, 45c) angeschlossen ist.

3. Behälter nach Anspruch 1 oder 2, wobei die Ansaugbaugruppe (17) zudem eine erste Einheit (19) oder eine Heizeinheit aufweist, die einen Kanal (23) zum Fördern eines Heizfluids aufweist, wobei der Kanal in der Kammer (15) des Behälters angeordnet und mit einer Einlassöffnung (25) und einer Auslassöffnung (27) für das Heizfluid versehen ist, wobei diese Öffnungen außerhalb des Behälters (11) angeordnet sind, und wobei die Heiz- und Ansaugbaugruppen (19, 21) voneinander durch einen Wandabschnitt (13) getrennt sind, wodurch die Einheiten (19, 21) voneinander getrennt wären wenn dieser Behälterwandabschnitt entfernt wäre,.

4. Behälter nach Anspruch 3, wobei die erste Einheit (19) und die zweite Einheit (21) an unterschiedlichen Stellen (13a, 13b) der Behälterwand (13) dem Behälter zugeordnet sind.

5. Behälter nach Anspruch 3 oder 4, wobei der Behälter eine prismatische Form hat und wobei die erste Einheit (19) und die zweite Einheit (21) an verschiedenen Seiten (35, 37, 39) des Prismas angeordnet sind.

6. Behälter nach einem der Ansprüche 3 bis 5, wobei die Einlassöffnung (25) und die Auslassöffnung (27) des Kanals (23) der ersten Heizeinheit (19) an wenigstens ein Solenoidventil (61) angeschlossen sind, das außerhalb des Behälters (11) angeordnet und mit der Behälterwand (13) in Kontakt ist, wobei das wenigstens eine Solenoidventil (61) dafür ausgelegt ist, die Strömung des Heizfluids, das in dem Kanal (23) zirkuliert, zu unterbrechen, um dessen Strömungsrate einzustellen.

7. Verfahren zum Herstellen eines Behälters (11) zur Aufnahme eines Fluids, wobei der Behälter eine Wand (13), die aus Kunststoff hergestellt ist und eine Behälterkammer (15) bildet, und eine Baugruppe (17) zum Ansaugen des in dem Behälter enthaltenen Fluids aufweist, wobei die Baugruppe (17) mit einer zweiten Einheit (21) oder Ansaugeinheit, die eine Kammer (29) mit einer Einlassöffnung und einer Auslassöffnung (33), die innerhalb bzw. außerhalb des Behälters (11) angeordnet sind, aufweist, wobei das Verfahren die folgenden Schritte aufweist:
- Herstellen eines Behälters (11) durch Gießen von Kunststoff in eine Gussform für Kunststoff,
- Bereitstellen der zweiten Einheit (21) oder Ansaugeinheit, die eine Verlängerung (21a) aufweist, die eine Einlasskammer (21b) bildet, die mit der Auslassöffnung (33) in Verbindung steht und mit der Kammer (15) des Behälters (11) durch einen Filter (57) in Verbindung steht, wobei die Ansaugeinheit (21) eine Hülse (41) zum Befestigen der Ansaugeinheit (21) an der Wand (13) des Behälters (11) aufweist, und wobei der Hülse (41) entweder direkt oder durch eine Stange (55) zusätzlich Temperatur-, Pegel- und Qualitätssensoren (45a, 45b, 45c) für die in dem Behälter (11) enthaltende Flüssigkeit zugeordnet sind, wobei der Filter (57) eine entsprechende austauschbare Kartusche bildet, die eine zylindrische Form mit einem im Wesentlichen toroidalen Fortsatz hat, mit Filtermaterial (57a) versehen ist, das zur Erhöhung der Filteroberfläche gefaltet ist und einen geschlossenen Boden (57b) aufweist, wobei die Hülse (41) mit einer Öffnung (59) zur Aufnahme des Filters (57), der in der Öffnung (59) befestigt ist, versehen ist,
- Zuordnen der zweiten Einheit (21) zu der Wand (13) des so erhaltenden Behälters auf solche Weise, dass die Verlängerung in dem Behälter angeordnet ist.

8. Verfahren nach Anspruch 7, wobei der Schritt des Herstellens des Behälters (11) die folgenden Schritte aufweist:
- Bereitstellen einer ersten Einheit (19) oder Heizeinheit, die einen Kanal (23) zum Fördern eines Heizfluids aufweist, wobei der Kanal in der Behälterkammer (15) angeordnet und mit einer Einlassöffnung (25) und einer Auslassöffnung (27) für das Heizfluid versehen ist, wobei die Öffnungen außerhalb des Behälters (11) angeordnet sind,
- Anordnen der ersten Einheit in einer Gussform für Kunststoff,
- Herstellen eines Behälters (11), der die erste Einheit (19) enthält, durch Gießen von Kunststoff in die Gussform für Kunststoff.

## Revendications

1. Réservoir (11) destiné à contenir un fluide, comprenant une paroi (13) en matière plastique et définissant à l'intérieur une chambre de réservoir (15), et un ensemble (17) pour aspirer le fluide contenu dans le réservoir, ledit ensemble (17) étant équipé d'une seconde unité (21), ou unité d'aspiration, qui comprend un conduit (29) ayant une ouverture d'entrée (31) et une ouverture de sortie (33) situées respectivement à l'intérieur et à l'extérieur du réservoir (11), dans lequel l'unité d'aspiration (21) comprend une extension (21a) agencée à l'intérieur du réservoir (11), ladite extension définissant à l'intérieur une chambre d'admission (21b) communiquant avec l'ouverture de sortie (33) et communiquant avec la chambre (15) du réservoir (11) par l'intermédiaire d'un filtre (57), **caractérisé en ce que** ladite unité d'aspiration (21) comprend une virole (41) pour fixer le dispositif d'aspiration (21) à la paroi (13) du réservoir (11), et dans lequel des capteurs de température, de niveau et de qualité (45a, 45b, 45c) pour le liquide contenu dans le réservoir (11) sont en outre associés à la virole (41) soit directement soit par l'intermédiaire d'une tige (55) et **en ce que** ledit filtre (57) définit une cartouche interchangeable correspondante qui a une forme cylindrique avec un développement sensiblement toroïdal, pourvue d'un matériau filtrant (57a) plissé pour en augmenter la surface filtrante et comprenant un fond fermé (57b), ladite virole (41) étant pourvue d'un trou (59) pour le logement dudit filtre (57) arrimé dans ledit trou (59).

2. Réservoir selon la revendication 1, dans lequel lesdits capteurs (45a, 45b, 45c) sont associés à la virole (41) sur la face (47) de ladite virole tournée vers l'intérieur du réservoir (11) de sorte qu'ils débouchent dans la chambre (15) délimitée par la paroi (13) du réservoir (11), et dans lequel sur la face opposée (49) de la virole (41) est prévu un siège (51) logeant une carte de circuit imprimé connectée électriquement auxdits capteurs (45a, 45b, 45c).

3. Réservoir selon la revendication 1 ou 2, dans lequel ledit ensemble d'aspiration (17) comprend en outre une première unité (19), ou unité de chauffage, qui comprend un conduit (23) pour acheminer un fluide de chauffage, ledit conduit étant logé au sein de la chambre (15) du réservoir et étant pourvu d'une ouverture d'entrée (25) et d'une ouverture de sortie (27) pour ledit fluide de chauffage, lesdites ouvertures étant agencées à l'extérieur du réservoir (11), et dans lequel lesdites unités de chauffage et d'aspiration (19, 21) sont séparées l'une de l'autre par une portion de paroi (13), moyennant quoi, si ladite portion de paroi de réservoir était enlevée, lesdites unités (19, 21) seraient disjointes l'une de l'autre.

4. Réservoir selon la revendication 3, dans lequel ladite première unité (19) et ladite seconde unité (21) sont associées au réservoir au niveau de différentes portions (13a, 13b) de ladite paroi de réservoir (13).

5. Réservoir selon la revendication 3 ou 4, dans lequel le réservoir a une forme prismatique, et dans lequel la première unité (19) et la seconde unité (21) sont agencées sur différentes faces (35, 37, 39) du prisme.

6. Réservoir selon l'une quelconque des revendications 3 à 5, dans lequel l'ouverture d'entrée (25) et l'ouverture de sortie (27) du conduit (23) de la première unité de chauffage (19) sont reliées à au moins une électrovanne (61) située à l'extérieur du réservoir (11) et en contact avec la paroi de réservoir (13), ladite au moins une électrovanne (61) étant agencée pour intercepter le flux du fluide de chauffage circulant au sein du conduit (23) afin d'en ajuster le débit.

7. Procédé de fabrication d'un réservoir (11) destiné à contenir un fluide, le réservoir comprenant une paroi (13) en matière plastique et définissant à l'intérieur une chambre de réservoir (15), et un ensemble (17) pour aspirer le fluide contenu dans le réservoir, ledit ensemble (17) étant équipé d'une seconde unité (21), ou unité d'aspiration, qui comprend un conduit (29) ayant une ouverture d'entrée (31) et une ouverture de sortie (33) situées respectivement à l'intérieur et à l'extérieur du réservoir (11), dans lequel ledit procédé comprend les étapes consistant à :
- obtenir un réservoir (11) par moulage de matières plastiques dans un moule pour matières plastiques ;
- fournir ladite seconde unité (21), ou unité d'aspiration, comprenant une extension (21a) définissant à l'intérieur une chambre d'admission (21b) communiquant avec l'ouverture de sortie (33) et communiquant avec la chambre (15) du réservoir (11) par l'intermédiaire d'un filtre (57), ladite unité d'aspiration (21) comprenant une virole (41) pour fixer l'unité d'aspiration (21) à la paroi (13) du réservoir (11), et dans lequel des capteurs de température, de niveau et de qualité (45a, 45b, 45c) pour le liquide contenu dans le réservoir (11) sont en outre associés à la virole (41) soit directement, soit par l'intermédiaire d'une tige (55), ledit filtre (57) définissant une cartouche interchangeable correspondante qui a une forme cylindrique avec un développement sensiblement toroïdal, pourvue d'un matériau filtrant (57a) plissé pour en augmenter la surface filtrante et comprenant un fond fermé (57b), ladite virole (41) étant pourvue d'un trou (59) pour le logement dudit filtre (57) arrimé dans ledit trou (59) ;
- associer ladite seconde unité (21) à la paroi (13) du réservoir ainsi obtenu de telle sorte que ladite extension soit logée au sein du réservoir.

8. Procédé selon la revendication 7, dans lequel ladite étape d'obtention du réservoir (11) comprend les étapes consistant à :
- fournir une première unité (19), ou unité de chauffage, qui comprend un conduit (23) pour acheminer un fluide de chauffage, ledit conduit étant logé au sein de la chambre de réservoir (15) et étant pourvu d'une ouverture d'entrée (25) et d'une ouverture de sortie (27) pour ledit fluide de chauffage, lesdites ouvertures étant situées à l'extérieur du réservoir (11) ;
- placer ladite première unité (19) dans un moule pour matières plastiques ;
- obtenir, par moulage de matières plastiques dans ledit moule pour matières plastiques, un réservoir (11) incorporant ladite première unité (19).
